## Europäisches Patentamt

## European Patent Office

## Office européen des brevets

(19)

(11) Veröffentlichungsnummer: **0 015 568**
**B1**

(12) **EUROPÄISCHE PATENTSCHRIFT**

(45) Veröffentlichungstag der Patentschrift:
24.03.82

(21) Anmeldenummer: 80101161.0

(22) Anmeldetag: 07.03.80

(51) Int. Cl.³: **C 09 J 3/16**, C 09 J 5/00

(54) **Verfahren zum Verleimen von Massivholz.**

(30) Priorität: **12.03.79 DE 2909566**

(43) Veröffentlichungstag der Anmeldung:
**17.09.80 Patentblatt 80/19**

(45) Bekanntmachung des Hinweises auf die Patenterteilung:
**24.03.82 Patentblatt 82/12**

(84) Benannte Vertragsstaaten:
**AT BE CH DE NL SE**

(56) Entgegenhaltungen:
**DE-A-1 794 393**
**DE-A-2 054 724**
**CHEMICAL ABSTRACTS, Band 89, 1978,**
**Seite 53, Nr. 7340g**
**Columbus, Ohio, U.S.A.**

(73) Patentinhaber: **BASF Aktiengesellschaft,**
**Carl-Bosch-Strasse 38, D-6700 Ludwigshafen (DE)**

(72) Erfinder: **Graser, Martin,**
**Buergermeister-Benz-Strasse 10, D-6711 Beindersheim**
**(DE)**
Erfinder: **Mayer, Johann, Dr., Am Mandelgarten 5,**
**D-6713 Freinsheim (DE)**
Erfinder: **Ebert, Joachim, Konrad-Adenauer-Strasse 1,**
**D-6940 Weinheim (DE)**
Erfinder: **Schatz, Hermann, Neubergstrasse 50,**
**D-6730 Neustadt 15 (DE)**
Erfinder: **Nieberle, Juergen, Prager Strasse 23,**
**D-6700 Ludwigshafen (DE)**

## Verfahren zum Verleimen von Massivholz

Bei der – vorzugsweise kalten – Verleimung (Verklebung) von Holzbauteilen mit wässrigen härtbaren Klebstoffen wird das Verleimungsergebnis durch die Verdunstung des im Klebemittel enthaltenen Wassers oder dessen Abwanderung ins Holz vor dem Zusammenfügen der Bauteile beeinflusst und u.U. beeinträchtigt. Dies gilt besonders für die Verleimung von grossflächigen Holzteilen beim Ingenieurholzbau, also der Herstellung von tragenden Bauteilen, Betonschalungsplatten und dgl., bei denen eine längere Liegezeit vor dem Zusammenfügen unvermeidlich ist. Die Verleimungstechnik verlangt im allgemeinen eine offene Zeit von wenigstens einer halben, in ungünstigen Fällen eineinhalb Stunden (die Antrockenzeiten werden gewöhnlich nach DIN 68 141, Ausgabe Oktober 1969, Absatz 2.1.3, angegeben). Ausser Phenol-Resorcin-Formaldehyd-Kondensationsharzen verwendet man für Massivverklebungen auch Polykondensate des Formaldehyds mit Harnstoff und/oder Melamin: Beide Harztypen haben Antrockenzeiten zwischen 25 und 50 Minuten.

In der DE-A-15 70 448 ist ein Phenol-Resorcin-Formaldehyd-Bindemittel beschrieben, das in Anwesenheit eines Alkalimetallsulfits kondensiert wurde. Die Verwendung solcher modifizierten Harze ist aber von Nachteil, weil bei ihnen die Festigkeitsausbildung länger dauert als bei Harzen, welche in der üblichen Weise kondensiert wurden.

Aufgabe der Erfindung ist die Schaffung von Mitteln bzw. die Angabe von Massnahmen, mit denen die Antrockenzeit von Leimharzen für die Flächenverleimung verlängert werden kann. Die Verwendung grösserer Mengen an Lösungsmitteln (Wasser) ist wegen der erforderlichen Mindestviskosität der Bindemittel als Massnahme zur Verlängerung der Antrockenzeit nicht geeignet.

Es wurde nun gefunden, dass man eine Verlängerung der Antrockenzeit um bis zu 100% erzielt, wenn man der Klebstoff-Mischung eine wässrige Dispersion (Emulsion) eines Wachses bzw. Paraffins in untergeordneter Menge zusetzt. Zweckmässig verwendet man bis zu 5 Gewichtsteile Wachs bzw. Paraffin je 100 Gewichtsteile flüssigen Klebstoffs. Verwendet man weniger als etwa 0,5 bis 1 Teil Paraffin, so verlängert sich die Antrockenzeit im allgemeinen nicht merklich. Überschreitet man die notwendige Paraffinmenge unnötig, so kann sich bei der Prüfung der Verleimungsgüte der messbare Holzfaserausriss und weiter auch die Bruchfestigkeit verringern.

Aus der DE-A 1 794 393 ist zwar bekannt, bei der Herstellung von Spanplatten dem Leim eine geringe Menge einer Paraffin-Emulsion zuzusetzen; diese Massnahme ist mehrfach beschrieben und auch allgemein üblich, weil es auf diese Weise gelingt, die Späne, aus denen eine solche Platte besteht und die eine grosse Oberfläche besitzen, gegen die Aufnahme von Wasser und damit gegen das Aufquellen widerstandsfähiger zu machen. Diese Aufgabe hat für die vorliegende Erfindung keine Bedeutung, weil das Aufquellen von Flächenverbindungen sich durch das Imprägnieren des Holzes kaum beeinflussen lässt.

Als wässrige Dispersionen bzw. Emulsionen von Wachsen bzw. Paraffinen sind die handelsüblichen Zubereitungen geeignet, die bisher zur Verbesserung der Feuchtewiderstandsfähigkeit von Spanholzwerkstoffen verwendet wurden und daher mit Leimharzen verträglich sind. Sie enthalten neben Wasser und einem Emulgiermittel sowie Stabilisatoren (Schutzkolloiden) Wachse (z. B. abgebaute Polyäthylene oder Polypropylene, natürliche Mineralwachse, wie Ozokerit oder vegetabilische Wachse, wie Carnaubawachs) oder – in den meisten Fällen – Paraffin, d. h. bei Raumtemperatur halbfeste bis feste Gemische von Paraffinkohlenwasserstoffen (n-Alkanen und deren Isomeren) geeigneten Molekulargewichts. Die Bezeichnungen «Emulsion» bzw. «Dispersion» werden im allgemeinen bei diesen Zubereitungen gleichberechtigt verwendet.

Für das vorliegende Verfahren eignen sich allerdings nur solche Emulsionen, deren Emulgatoren und Stabilisatoren die Polykondensationsreaktion des Leimharzes nicht unzulässig verändern. Emulsionen mit stark alkalischen Emulgatoren oder Stabilisatoren sind z. B. weniger geeignet; sie beschleunigen die Aushärtung bei Resorcin- bzw. Phenolharzen und verzögern die Aushärtung bei Aminoplastharzen.

Als Paraffin-Emulsionen können z. B. handelsübliche ammoniakfreie anionische und kationische Emulsionen verwendet werden, wie sie bei der Spanplattenherstellung zur Hydrophobierung dieser Platten gebraucht werden. Sie enthalten im allgemeinen 33% bis 67%, meist 45% bis 55% eines Paraffins, dessen Schmelzpunkt bei 50 bis 60°C liegt. Emulsionen anderer wachsartiger Stoffe haben im allgemeinen vergleichbare Feststoffgehalte. Die vorstehenden Prozentangaben beziehen sich, ebenso wie in den nachstehenden Beispielen, auf das Gewicht.

Vor der Zugabe zu den Klebstoffmischungen kann man solche Paraffin-Emulsionen mit Wasser auf die gewünschte Konzentration verdünnen.

Als vorteilhaft hat sich erwiesen, eine geeignete Paraffin-Emulsion zunächst in ein vorzugsweise mit Methanol veräthertes bzw. wasserlösliches Melamin- oder Harnstoff-Formaldehydharz einzurühren bzw. mit diesem zu vermischen. Solche verätherte Harze sind bekannt und werden vorzugsweise als Lackbindemittel, Textilhilfsmittel u. ä. verwendet. Sie sind handelsüblich. Die entsprechenden Mischungen können z. B. mit Wasser verdünnt werden, das auch Harnstoff enthalten kann. Bei Zugabe solcher Mischungen, die einen Teil der meist erforderlichen Verdünnungsflüssigkeit für den Leim bilden können, wird die Antrockenzeit noch weiter verlängert.

Vermischt man eine geeignete Paraffin-Emulsion mit einer handelsüblichen Acrylsäure- bzw. Acrylat-Dispersion, so bewirkt diese Mischung ebenfalls eine Verlängerung der Antrockenzeit.

Sowohl verätherte Melamin- oder Harnstoffharze als auch Acrylpolymere allein beeinflussen die Antrockenzeit nicht.

Durch einen Zusatz geeigneter Paraffin-Emulsionen zu den Klebstoff-Mischungen werden Gelierzeiten bzw. Abbindegeschwindigkeiten der Klebstoffmischungen nicht verlängert. Die in der DE-A-15 70 848 beschriebenen modifizierten Resorcin-Phenol-Formaldehydharze haben dagegen längere Gelierzeiten und benötigen daher für die Festigkeitsausbildung eine längere Zeit als vergleichbare Harze, die nicht in Anwesenheit von Alkalimetallsulfit kondensiert worden waren.

Die erfindungsgemässen Zubereitungen können dem Leim direkt oder zusammen mit dem Härter, einem Füllstoff, einem Andickungsmittel oder einem Thixotropiermittel zugesetzt werden.

Beispiel 1 bis 7

Unter Verwendung zweier handelsüblicher Resorcin-Phenol-Formaldehyd-Harze (RPF-Harze) mit 58 bzw. 50% Trockengehalt wurden Leimflotten hergestellt unter Zusatz der jeweils vom Hersteller vorgeschriebenen Härter sowie erfindungsgemässer Mischungen.

Eine Paraffin-Emulsion wurde wie folgt hergestellt:

Ein sogenanntes Emulgierwachs, d. h. ein Paraffin mit einem Schmelzpunkt von 55°C, das mit 10% Stearinsäure versetzt worden war, wird auf 70 bis 90°C gebracht und mit Hilfe eines schnelllaufenden Rührwerks mit der gleichen Menge heissen Wassers vermischt. Die so erhaltene 50%ige Emulsion kann durch weiteren Wasserzusatz auch auf eine geringere Konzentration (z. B. 15%) gebracht werden und wird durch Abkühlen stabilisiert.

Eine Mischung zur Verlängerung der Antrokkenzeit, wie sie im nachstehenden Beispiel 3 und 6 verwendet wurde, kann durch Vermischen von 24 Gew.teilen wässrigem 70%igem methylierten Melamin-Formaldehyd-Harz (handelsüblich, Molverhältnis 1,6), 50 Gew.teilen Wasser, 16,7 Gew.teilen Paraffin-Emulsion 50%ig, 9,3 Gew.teilen Harnstoff, fest, erhalten werden.

Entsprechend erhält man eine Basismischung, wie sie in Beispiel 4 und 7 angewendet wurde, aus 67 Gew.teilen Wasser, 25 Gew.teilen 50%ige Paraffin-Emulsion, 8 Gew.teilen einer handelsüblichen 50%igen Dispersion eines Copolymeren von Äthylacrylat und Acrylsäure.

Das Ergebnis einer Testserie nach den Vorschriften der DIN 68 141 ist in der nachstehenden Tabelle 1 dargestellt.

Tabelle 1:
(allg. Mengen Gewichtsteile)

| | 1 | 2 | 3 | 4 | 5 | 6 | 7 | Vergleich | |
|---|---|---|---|---|---|---|---|---|---|
| RPF-Harz (1) mit 58% Trockengehalt | 100 | 100 | 100 | 100 | – | – | – | 100 | – |
| RPF-Harz (2) mit 50% Trockengehalt | – | – | – | – | 100 | 100 | 100 | – | 100 |
| Härter für Harz (1) | – | 20 | 20 | 20 | – | – | – | 20 | – |
| Härter für Harz (2) | – | – | – | – | 20 | 20 | 20 | – | 20 |
| Paraffin-Emulsion 15%ig | 10 | – | – | – | 10 | – | – | – | – |
| Paraffin-Emulsion 50%ig | – | 10 | – | – | – | – | – | – | – |
| Emulsions-Mischung mit veräthertem Melaminharz | – | – | 20 | – | – | 20 | – | – | – |
| Emulsions-Mischung mit Acrylatdispersion | – | – | – | 20 | – | – | 20 | – | – |
| Antrockenzeit nach DIN 68 141 (Min) | 70 | 75 | 85 | 80 | 70 | 74 | 75 | 40 | 35 |

Beispiel 8

Ein handelsübliches modifiziertes Melamin-Harnstoff-(MUF-)Harz mit ca. 60% Feststoffgehalt wurde mit je 3 Teilen auf 100 Teile eines hierfür empfohlenen flüssigen Härters 15 bzw. 17 Teilen eines organischen Füllstoffs (Kokos-Schalenmehl), wie für fugenfüllende Verleimungen üblich) und in einem Fall mit 10 Teilen 15%iger Paraffin-Emulsion versetzt; die Vergleichsprobe erhielt keinen Zusatz von Paraffin-Emulsion.

Die Antrockenzeit betrug 55 Minuten, bei der erfindungsgemässen und 38 Minuten bei der unveränderten Probe.

Beispiele 9 und 10

Ein flüssiges (70%) und ein pulverförmiges Harnstoffharz wurden durch entsprechende Zusätze zu einem kalthärtenden fugenfüllenden Leim verarbeitet und wiederum vergleichend die Antrockenzeiten bestimmt (Tabelle 2).

Tabelle 2:

|                              | 9   | Vergl. | 10  | Vergl. |
| ---------------------------- | --- | ------ | --- | ------ |
| UF-Harz flüssig              | 100 | 100    | –   | –      |
| UF-Harz Pulver               | –   | –      | 100 | 100    |
| Leguminosenmehl              | 35  | 35     | 50  | 50     |
| Wasser                       | 18  | 25     | 90  | 100    |
| Paraffin-Emulsion, 15%ig     | 10  | –      | 15  | –      |
| Härter, flüssig              | 10  | 10     | 15  | 15     |
| Antrockenzeit nach DIN 68 141 (Min) | 50  | 40     | 45  | 38     |

**Patentansprüche**

1. Verfahren zum vorzugsweisen kalten Verleimen von Massivholz mit Klebstoffen auf der Grundlage von wässrigen Formaldehydkondensaten des Harnstoffs, Melamins oder eines Phenols, wobei die zu verleimenden Flächen mit dem Bindemittel und ggf. erforderlichen Härtungsmittel behandelt und innerhalb der Antrockenzeit (offenen Zeit) zusammengefügt werden, dadurch gekennzeichnet, dass man insbesondere zur Verlängerung der Antrockenzeit, dem Klebstoff eine wässrige Dispersion eines Wachses bzw. Paraffins in untergeordneter Menge zusetzt.

2. Verfahren nach Anspruch 1, dadurch gekennzeichnet, dass man eine Paraffinemulsion vor ihrer Verwendung mit einem vorzugsweise methanolverätherten bzw. wasserlöslichen Melamin- oder Harnstoff-Formaldehyd-Harz oder einer handelsüblichen Acrylsäure- bzw. Acrylat-Dispersion mischt.

**Claims**

1. A process for the preferably cold glueing of solid wood with adhesives based on aqueous formaldehyde condensates of urea, melamine or a phenol, the surfaces to be glued being treated with the binder and any curing agent that may be necessary and being joined together within the work life (pot life), characterized in that a minor amount of an aqueous dispersion of a wax or paraffin is added to the adhesive especially in order to prolong the work life.

2. A process as claimed in claim 1, characterized in that a paraffin emulsion is mixed, prior to being used, with a preferably methanol-etherified or water-soluble melamine-formaldehyde or urea-formaldehyde resin or a commercial acrylic acid dispersion or acrylate dispersion.

**Revendications**

1. Procédé pour coller du bois massif, de préférence à froid, avec des matières adhésives à base de condensats aqueux du formaldéhyde et de l'urée, de la mélamine ou d'un phénol, les surfaces à coller étant traitées avec la colle et les agents de durcissement éventuellement nécessaires et réunies ou assemblées pendant la période de séchage (période de latence), caractérisé en ce que l'on mélange à la matière adhésive, en particulier pour en prolonger le délai de séchage, une proportion mineure d'une dispersion aqueuse d'une cire ou d'une paraffine.

2. Procédé suivant la revendication 1, caractérisé en ce que l'on mélange une émulsion de paraffine avant son utilisation avec une résine mélamine-formaldéhyde ou urée-formaldéhyde de préférence éthérifiée par l'alcool méthylique ou hydrosoluble ou avec une dispersion d'acide acrylique ou d'acrylate du commerce.